# EUROPEAN PATENT APPLICATION

(11) **EP 4 671 966 A1**
(43) Date of publication of application: **31.12.2025**
(21) Application number: 25186489.8
(22) Date of filing: 30.06.2025
(51) Int. Cl.: G06F 8/35

(54) **METHOD AND COMPUTER SYSTEM FOR GENERATING SOFTWARE ARTEFACTS USING A SELF-OPTIMISING MULTI-AGENT ARCHITECTURE**

(30) Priority: 30.06.2024 DE 102024118482
(71) Applicant: seisser.tech GmbH, 40217 Düsseldorf (DE)
(72) Inventor: Seisser, Dominik, 40217 Düsseldorf (DE)
(74) Representative: Bausch, Thomas

(57) **Abstract**

A computer-implemented method and system (100) for automatically generating executable software. A high-level software requirement (112) is received and decomposed by a planning module (105) into discrete tasks (114). The system maintains an agent registry (108) in a memory (103), storing capability descriptors and historical performance metrics for a plurality of agents (110). A delegation module (106) selects an agent to execute a task based on a comparison of task requirements with the agent's capabilities and, critically, its past performance metric. After the agent executes a command (115) in an execution environment (116), a resulting performance datum (118) is used to programmatically update that agent's performance metric in the registry (108). This creates a closed, self-optimising feedback loop, wherein the empirical results of one task directly influence the selection of an agent for a subsequent task, thereby optimising the allocation of computational resources.

## Description

The present invention relates to computer-implemented methods and systems and, more particularly, to the automated generation, updating, and deployment of executable software artefacts from high-level specifications. The invention is situated in the technical fields of computer-aided software engineering, distributed computing orchestration, and secure machine control.

Industrial-scale software development environments typically comprise a plurality of distinct tools, including
(i) an authoring tool for requirements,
(ii) one or more version-controlled code repositories, and
(iii) a separate build-and-test infrastructure.

A first technical problem arises in that the manual propagation of a change in one representation, e.g., a design specification document, into the other technical representations, e.g., source code, compiled binaries, deployment descriptors, is a slow and error-prone process. This process consumes significant computing resources, particularly when several remote human collaborators work in parallel on a complex software project.

Existing continuous-integration (CI) services are known to execute predefined jobs in isolated container environments. However, such systems exhibit several technical deficiencies. Firstly, they neither
(a) provide a mechanism to translate an evolving, high-level natural-language description into compilable source code, nor
(b) guarantee deterministic synchronisation between the multiple state representations of the same software project.

This lack of synchronisation is a frequent cause of build failures and bugs. Secondly, conventional Cl schedulers allocate worker nodes according to static rules and therefore cannot optimise the usage of computational resources, e.g. CPU, memory, on the basis of empirically collected performance feedback from the worker nodes themselves.

Multi-agent software architectures are also known, for example from U.S. Patent No. 6,851,115 B1, which describes a facilitator agent that coordinates distributed electronic agents. In such an architecture, agents register their functional capabilities with the facilitator. The facilitator receives a service request in the form of a goal, decomposes it into sub-goals, and dispatches these sub-goals to agents whose registered capabilities match the requirements of the sub-goal. The delegation in such systems is therefore based on a static declaration of what an agent *can* do. These systems, however, do not provide a mechanism for dynamically optimising the delegation process based on the empirical performance of the agents. Specifically, they fail to teach or suggest maintaining a record of historical performance metrics for each agent, selecting an agent based not only on its capabilities but also on its past execution performance, and programmatically updating said performance metrics based on data returned from task execution. The present invention overcomes this limitation by introducing a closed, adaptive feedback loop at the orchestration layer, which allows the system to learn and adapt, delegating tasks to agents that are empirically the most efficient and reliable for a given task type.

Systems are also known that can generate application code from a high-level visual input, such as a GUI screen image, by using a machine-learning classifier to identify UI components and generate a corresponding abstract model. However, such systems focus on the translation from a static visual design to code and do not address the technical problem of dynamically orchestrating and optimizing the underlying software development and execution tasks in a distributed environment. Specifically, they fail to provide a mechanism for selecting between different code-generation agents, whether human or computer, based on their empirical performance history, nor do they implement a feedback loop to update this history, thereby failing to optimize the allocation of computational resources over time.

Advanced systems are also known, for instance from US 2021/0397418 A1, which utilize natural language understanding (NLU) models to process requirement documents and other inputs like a design canvas to extract entities and intents, and thereafter generate application code. These systems, however, are primarily directed at the challenges of *interpreting* high-level, human-authored specifications and translating them into a set of code artefacts. They do not disclose or suggest a subsequent, iterative orchestration layer that manages a plurality of heterogeneous agents (e.g., different AI models, human developers) and dynamically allocates software-development tasks to these agents. Critically, the prior art lacks the concept of maintaining an agent registry with historical performance metrics (such as execution time or defect rate) and using a closed feedback loop wherein the measured performance of an agent on one task is programmatically used to update its registry entry, thereby influencing the selection of an agent for a subsequent task. The technical problem of creating a self-optimising system for the efficient allocation of computational and human resources during the iterative software development lifecycle thus remains unsolved.

Further known by US 2016/0154629 A1 are integrated development environments that automate the generation of build scripts from user-defined metadata and predefined build rules. The system translates these high-level configurations into a sequence of build commands. While such systems can perform partial rebuilds by detecting changes in source code or metadata files, they operate on a static, pre-configured rule set. They are not configured to orchestrate a plurality of distinct agents, nor to select an agent for a given task based on dynamically updated performance metrics like execution time or defect rate. Consequently, they cannot adaptively optimize the allocation of development resources in response to empirical performance data, which is a key technical problem addressed by the present invention.

Advanced methods for generating source code from multi-modal specifications are also known. US 2023/0176829 A1, for instance, discloses a method that combines a pre-trained language model with a component-based program synthesizer. The language model is first used to generate a set of initial candidate programs from a natural language description. Program components are then inferred and extracted from these candidates to guide the program synthesizer in constructing a final program that is consistent with a set of formal input-output examples.

This approach addresses the technical problem of accurately inferring a single, correct program from an ambiguous or incomplete specification. The technical contribution lies in the synergy between the language model and the synthesizer for a single program inference task. However, this document does not disclose the system-level architecture for orchestrating a complete, iterative software development process across a distributed set of resources. It does not teach the management of a heterogeneous pool of agents, the maintenance of an agent registry storing empirical performance metrics such as execution time or defect rate, nor a delegation module that dynamically allocates tasks to agents based on these historical metrics. Consequently, it does not disclose the self-optimising feedback loop of the present invention, which addresses the distinct technical problem of efficient computational resource utilisation within a multi-agent software generation system.

A further technical difficulty arises in the secure handling of confidential code segments, for example, proprietary control logic for an industrial robot, within a multi-tenant cloud environment. The confidential code must remain in a protected execution tier while still being capable of being tested and executed together with non-confidential tiers, without compromising the security or integrity of the protected tier. Existing systems do not offer an integrated solution to this problem.

Further known are computer-implemented methods for facilitating the design of software applications. For example, EP 4 530 826 A1 describes a method for creating a user interface (UI) for an application. The method proposes generating one or more sample Uls based on an initial set of UI parameters, displaying the sample Uls to a user, and then iteratively updating the Uls by receiving user input indicative of a desired amendment. The feedback loop disclosed is between a human designer and a UI generation tool to refine the visual and functional properties of the UI.

The technical problem addressed by this system is the facilitation of the UI design process itself. It does not, however, address the technical problem of managing and optimising the underlying computational resources in a distributed software generation system. Notably, EP '826 does not disclose a backend architecture that decomposes a software project into discrete execution tasks for a plurality of agents. It therefore fails to teach an agent registry that stores capability descriptors and empirical performance metrics for each agent, a delegation module that selects an agent based on a comparison of task requirements against these stored metrics, or a feedback mechanism to programmatically update an agent's performance metric to influence future delegation decisions.

The use of generative artificial intelligence models for software analysis is also known. For example, WO 2025/029426 A1 describes a system that, in response to a detected issue such as a software crash, builds an error context and provides this context along with the failing source code to a language model. The model then generates an output, such as an explanation of the failure or a proposed code fix. Such systems, however, are primarily diagnostic and reactive, being triggered by a pre-existing software failure. They do not address the distinct technical problem of a constructive, end-to-end software generation process that begins from a high-level, abstract specification and employs a self-optimising, multi-agent architecture to orchestrate the decomposition and implementation of that specification.

The invention solves the above-identified technical problems by providing a multi-tier computer program product, in particular a computer-implemented method for automatically generating executable software from a high-level specification, the method comprising
(a) receiving, at a processor, a high-level input that defines a software project requirement;
(b) decomposing, by the processor executing a planning module, the high-level input into a plurality of discrete software-development tasks, each task having an associated resource-demand estimate;
(c) maintaining, in a computer memory, an agent registry that stores, for each of a plurality of agents,
   - a capability descriptor identifying at least one of: supported programming languages, available tool-chain versions, processor quota, or memory quota, and
   - at least one performance metric indicative of past execution performance of the agent;
(d) selecting, by the processor executing a delegation module, a first agent from the agent registry to execute a first one of the software-development tasks, the selection being based on a comparison between the resource-demand estimate of the first task and the capability descriptor and the performance metric of the first agent;
(e) transmitting, to an execution environment associated with the first agent, at least one command that implements the first task;
(f) executing the at least one command in the execution environment and obtaining at least one performance date comprising at least one of: task completion status, execution time, peak-memory usage, or defect rate;
(g) programmatically updating, by the processor, the performance metric of the first agent in the agent registry on the basis of the at least one performance date; and
(h) repeating steps (d) to (g) for a subsequent one of the software-development tasks, wherein the updating performed in step (g) influences the selection made in step (d) for the subsequent task.

In an embodyment of the computer implemented method estimating, prior to step (d), a difficulty score for each software-development task, the selection in step (d) additionally being based on the difficulty score is comprised.

In a further embodyment of the computer implemented method at least one of the plurality of agents is an Al worker that executes a large-language-model and generates source-code deltas and shell commands in response to the software-development tasks.

In a further embodyment of the computer implemented method the high-level input of step (a) is received via a multi-modal editor that permits text, image and diagram input and emits change-events annotated with timestamps and session identifiers.

In a further embodyment of the computer implemented method the execution environment of step (f) is a container constrained by a predefined memory limit, the method further comprising aborting execution and reverting a source-code delta when the limit is exceeded.

A further embodyment of the computer implemented method comprises synchronising, after step (f), a change made to a source-code representation of the software project with a corresponding change in at least one different representation selected from:
- a natural-language design document,
- an abstract syntax tree, or
- a compiled binary.

A further embodiment of the computer implemented method comprises generating, by a state-synchroniser, human-readable annotations that highlight differences between the natural-language design document and the source-code representation and injecting the annotations into a multi-modal editor for user approval.

In a further embodiment of the computer implemented method the performance date obtained in step (f) is fed to a reinforcement-learning algorithm that updates at least one parameter of the large-language-model executed by the Al worker.

In a further embodiment of the computer implemented method the agent registry stores data for at least one human agent and at least one computer agent and the delegation module of step (d) is configured to select between the human agent and the computer agent.

In a further embodiment of the computer implemented method the at least one command transmitted in step (e) is logged in a command-history, the command-history being provided to the Al worker as part of the context for generating subsequent commands.

A further embodiment of the computer implemented method comprises compiling the modified source code and, upon successful compilation, launching or reloading a running software process inside the execution environment.

The invention also solves the above-identified technical problems by providing a computer system product comprising at least one processor and at least one memory storing instructions which, when executed by the at least one processor, causes the system to carry out the method as described above. This computer system product may comprise a non-transitory computer-readable medium storing program instructions which, when executed by one or more processors, causes the one or more processors to perform the method as described above. The computer system product may comprising instructions which, when the program is loaded into memory and executed by a computer, causes the computer to carry out the method as described above.

The invention also solves the above identified technical problems by a computer system according to the method and system as described above, where the computer program is executed by different single computers not being connected with each other, e.g. having a fire wall between them, and any data has to be transferred by appropriate and suitable means. This allows measures to prevent misuse of confidential data.

In this case a computer program or a set of computer programs is comprised wherein the instructions are provided, alternatively or in combination as
(a) source code,
(b) compiled object code, or
(c) an intermediate byte-code.

The system comprises several interconnected components. A multi-modal document editor, implemented as a frontend client, captures requirements. A session-based backend server allocates a dedicated cloud development environment (CDE) in response to a session-initiation request. An Al worker interprets the document content, generates source-code deltas and executable shell commands, and forwards these to a shell client running inside the CDE. A state-representation synchroniser maintains congruency between a plurality of technical representations. At the core of the invention, an agent registry, a planning module, and a delegation module jointly perform self-optimising task allocation. The delegation module selects agents based on their registered capabilities and historical performance data. This creates a closed feedback loop that optimises resource usage. An integrated version-control layer records every iteration as an immutable commit.

In a specific technical use case, such as the generation of real-time control software for a pick-and-place robot arm, confidential security-critical routines reside in a locked-down safety tier while other code is generated in separate tiers. The invention technically guarantees that the tiers interact only via whitelisted communication channels, thereby maintaining safety certification compliance. The invention achieves several technical effects:
a) Reduced Latency: End-to-end latency is reduced because each edit of a design document triggers an automated plan-decompose-delegate-execute loop that completes without requiring manual intervention.
b) Avoidance of Resource Overruns: Memory and CPU overruns are avoided because the delegation module selects only agents whose stored prior performance metrics demonstrate compliance with a given task's estimated resource demand.
c) Guaranteed Confidentiality: Confidential code is technically prevented from leaving its security tier because the backend system mounts the corresponding repository in a separate Linux namespace and exposes only a defined API facade to the outer tiers.
d) Elimination of Representational Drift: The state-representation synchroniser eliminates divergence between representations, thereby preventing recompilation errors caused by stale or inconsistent interface descriptions.

The invention is further explained by way of exemplary embodiments and with reference to the attached drawings, in which:
- Fig. 1: is a schematic block diagram of a computer system (100) configured to execute the inventive method, showing the primary software and hardware components and their interaction with external entities.
- Fig. 2: is a flowchart illustrating the steps (200-214) of the computer-implemented method according to a primary embodiment of the invention.
- Fig. 3: is a schematic diagram illustrating a multi-tier security architecture (400) for secure machine control, a specific technical application of the invention.
- Fig. 4: is a data-flow diagram illustrating the operation of the state-synchroniser module (107) as used in a particular embodiment of the invention.
- Fig. 5: i s a flowchart illustrating a difficulty-estimation algorithm as used in a particular embodiment of the invention.

For the purpose of this detailed description, the following terms are used with the specific technical meanings indicated:
- Execution Environment (116): A disposable, sandboxed environment, for example a Kubernetes Pod containing at least one Docker container that provides a POSIX-compatible shell, a compiler tool-chain, and a network firewall configured to accept only commands listed in a whitelist.
- Agent (110): Either a computer agent, such as an Al worker (111), or a human agent (113), which is registered in the agent registry (108).
- Representation: One of a plurality of concrete data structures that fully or partially expresses the state of the software project, including but not limited to a natural-language design document, source code, an abstract syntax tree, or a compiled binary.

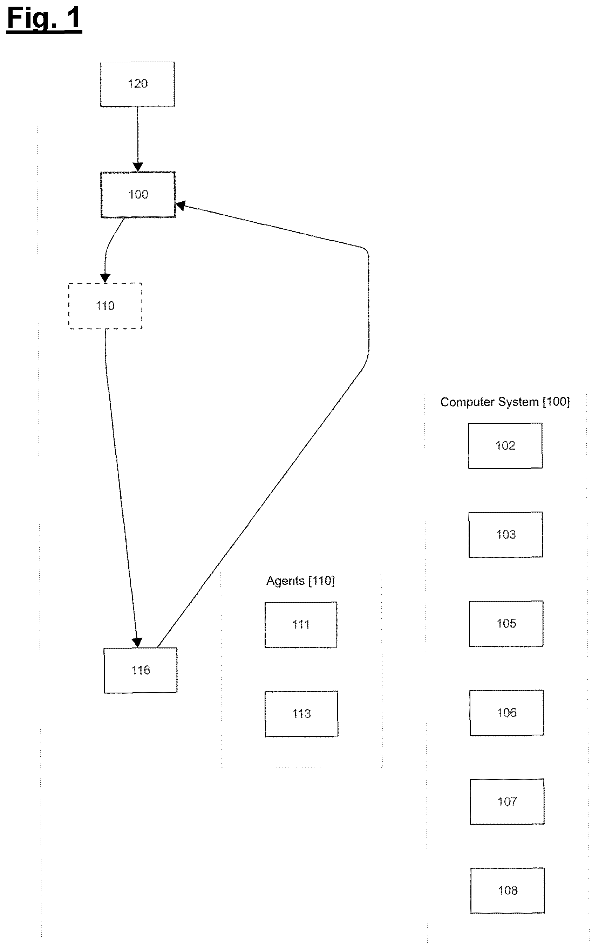

Fig. 1 shows a computer system (100) according to an embodiment of the invention. The system (100) comprises at least one processor (102) communicatively coupled to at least one memory (103). The memory (103) stores machine-executable instructions which, when executed by the processor (102), configure the system to perform the inventive method. The instructions comprise a plurality of software modules, including a planning module (105), a delegation module (106), and an optional state-synchroniser module (107). These modules collectively function as an orchestrator. The memory (103) further maintains an agent registry (108), which is a data structure, for example a database, storing information for a plurality of agents (110).

The system (100) is implemented in a client-server architecture. A multi-modal editor (120), typically running as a frontend client in an end-user's web browser, is used to provide a high-level input (112). The system (100) receives this input (112) and orchestrates the various agents (110), which may be computer agents such as an Al worker (111) or human agents (113). The system (100) dispatches software-development tasks (114) and commands (115) to a selected agent from the plurality of agents (110). The agent performs the work within a provisioned execution environment (116). Upon task completion or during execution, the environment (116) returns at least one performance datum (118) to the system (100).

A core technical contribution of the invention is this self-optimising delegation. The agent registry (108) stores not only an agent's static capabilities but also its empirical performance history. When a task (114) is defined, the delegation module (106) queries the registry (108) to select the agent (110) with the best historical performance for that type of task, balanced against its capabilities and availability. After task execution, a new performance datum (118) is programmatically added to the agent's history in the registry (108). This constitutes a closed, adaptive feedback loop at the orchestration layer.

In a preferred embodiment, the agent registry (108) is implemented as a relational database stored in the memory (103). The database comprises at least two tables: an agents table and a performance_log table. The agents table stores static information for each agent (110), including a unique agent identifier and the agent's capability descriptor.

The performance_log table stores empirical data from executed tasks, with each entry containing a reference to the agent identifier, the performance datum (118) obtained from an execution, and attributes of the task performed. When the delegation module (106) selects an agent, it queries these tables to find the agent with the best historical performance for a given task type. After execution, the system (100) programmatically inserts a new entry into the performance_log table, linking the new performance datum (118) to the agent that performed the task. This direct, programmatic feedback loop constitutes the self-optimising control system for computational resources.

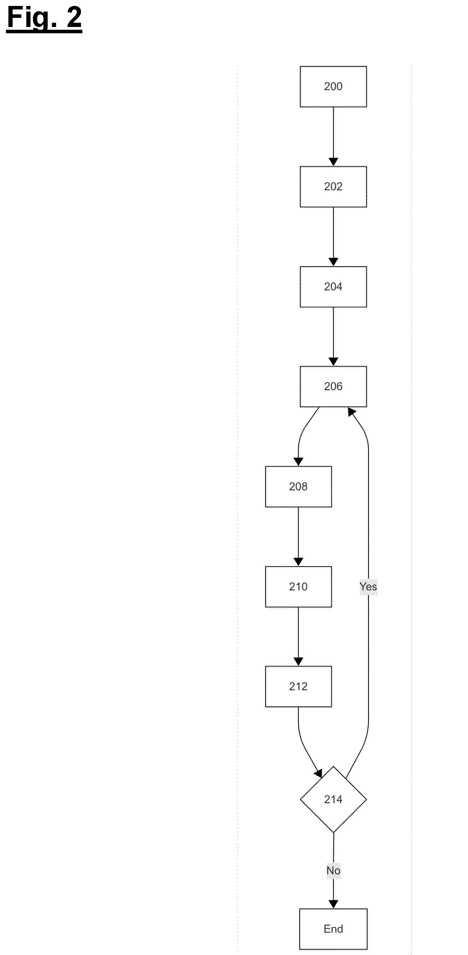

Fig. 2 is a flowchart illustrating the core steps of the method. The process begins at step (200), where the processor (102) receives a high-level input (112). At step (202), the planning module (105) programmatically decomposes this input into a plurality of discrete software-development tasks (114). At step (204), the system maintains the agent registry (108). At step (206), the delegation module (106) selects an agent from the plurality of agents (110) from the registry (108) based on a comparison of the task's requirements against the agent's stored capability descriptor and historical performance metric. At step (208), the system transmits at least one command (115) to the execution environment (116). At step (210), the command (115) is executed, and a performance datum (118) is obtained. At step (212), the processor (102) programmatically updates the performance metric for the selected agent in the agent registry (108). Finally, at decision step (214), if subsequent tasks remain, the process repeats from step (206), ensuring that the updated performance metric from the prior loop influences the next selection.

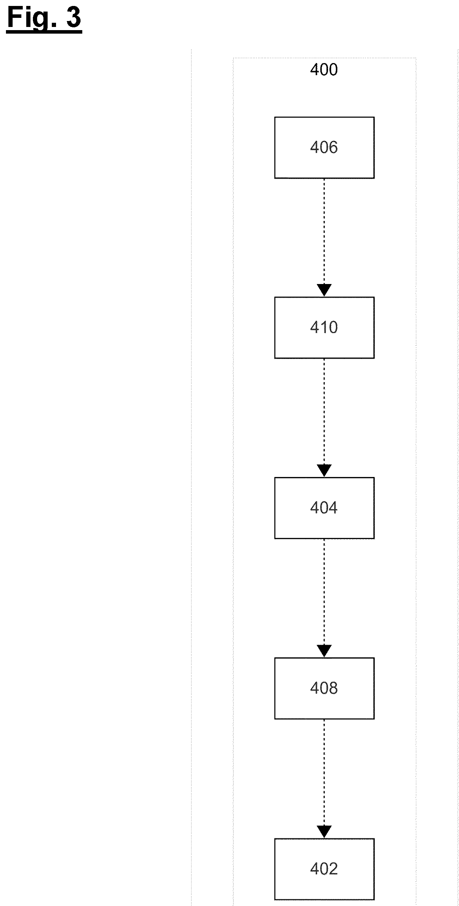

Fig. 3 shows a specific technical application of the invention for building secure industrial automation software, which employs a multi-tier security architecture (400). This architecture is designed to technically enforce separation of concerns, which is critical for safety and security. It comprises:
- A safety-critical tier (402), corresponding to a Tier 0, which contains the core control logic, for example a proprietary motion_core library for a robot arm. This tier is maximally isolated.
- An application service tier (404), corresponding to a Tier 1, which acts as a controlled intermediary. It is the only component permitted to communicate with the safety-critical tier (402), doing so via a first restricted channel (408), such as a local UNIX socket. This tier (404) exposes a well-defined and restricted API to the outermost tier.
- A user interface tier (406), corresponding to a Tier 2, where UI components are generated. It is the most exposed tier and can communicate only with the API of the application service tier (404) via a second restricted channel (410), such as an authenticated HTTPS connection.

The inventive system generates and deploys code into these respective tiers (402, 404, 406) while programmatically enforcing the communication constraints between them. This strict, technically enforced separation ensures that the safety-critical core in tier (402) remains uncompromised and its integrity verifiable, even if the dynamically generated code in the user interface tier (406) contains a vulnerability. This solves the technical problem of securely handling confidential code within a multi-tenant environment while allowing it to be developed and tested alongside non-confidential code.

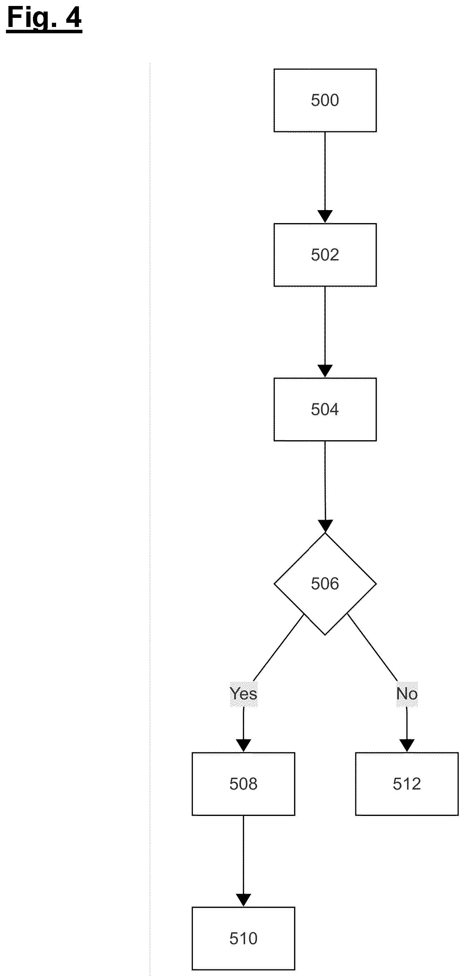

Fig. 4 shows the operation of the state-synchroniser module (107), which addresses the technical problem of representational drift. When a change is detected in a source representation at step (500), a transformer generates a corresponding change in a target representation at step (502). The system then performs a technical verification at step (504), such as compiling the source code or running a test suite. A technical conflict is defined as an event that results in a non-executable or logically inconsistent state. If the verification (504) determines a technical conflict exists (the "Yes" branch from decision 506), the system performs an automated rollback at step (508) and generates a task for a human agent (113) with specific technical error data at step (510). If no technical conflict is detected (the "No" branch from 506), the change is committed to version control at step (512).

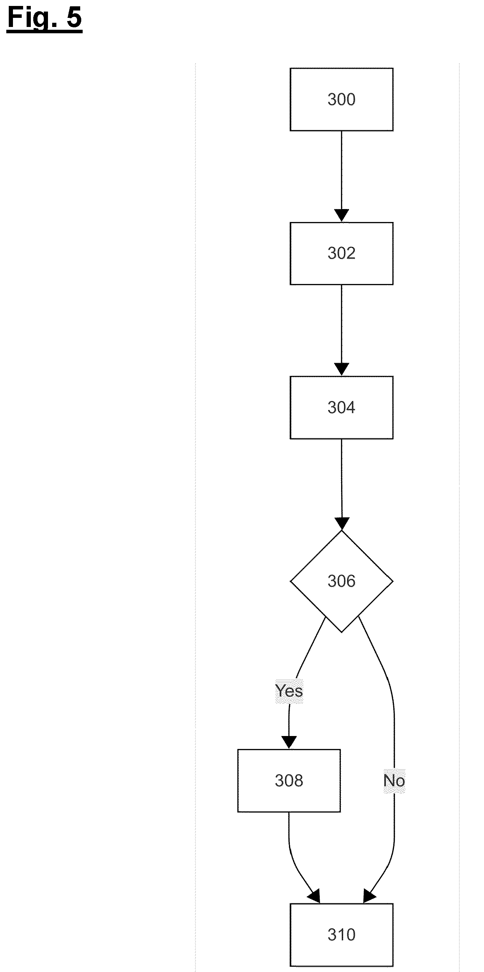

Fig. 5 illustrates the difficulty-estimation algorithm. Its input features for a given task (114) are extracted reference sign lisat step (300). A model predicts a difficulty score (304) at step (302). If this score exceeds a defined threshold (the "Yes" branch from decision 306), a corrective action is triggered at step (308), such as increasing resource allocation for the execution environment (116) or escalating the task to an agent (110) with higher capabilities. Otherwise (the "No" branch), the system proceeds with normal task execution at step (310). This proactively prevents resource-exhaustion failures. The AI worker (111) can be a transformer-based large-language model fine-tuned on a specialised dataset of code-description pairs, and the difficulty estimation model can be a gradient-boosting regression model trained to predict the computational resources required for a software task.

### Reference sign list

- 100: Computer System
- 102: Processor
- 103: Memory / Computer Memory
- 105: Planning Module
- 106: Delegation Module
- 107: State-Synchroniser Module
- 108: Agent Registry
- 110: plurality of agents
- 111: AI Worker / Computer Agent
- 112: High-level Input / software requirement
- 113: Human Agent
- 114: Software-Development Task / tasks
- 115: Command / commands
- 116: Execution Environment
- 118: Performance Datum
- 120: Multi-modal Editor
- 200: receiving / receives high-level input
- 202: decomposing / decomposes input into tasks
- 204: maintaining / maintains agent registry
- 206: selecting / selects an agent
- 208: transmitting / transmits a command
- 210: executing command and obtaining datum / command is executed
- 212: programmatically updating / updates performance metric
- 214: repeating / repeats for subsequent tasks
- 300: extracting input features for a task
- 302: predicting / estimating difficulty score
- 304: Difficulty Score
- 306: Decision: Score exceeds threshold?
- 308: triggering / triggers corrective action
- 310: proceeding / proceeds with normal execution
- 400: Multi-tier Security Architecture
- 402: Safety-critical Tier
- 404: Application Service Tier
- 406: User Interface Tier
- 408: First Restricted Channel
- 410: Second Restricted Channel
- 500: detecting / detects change
- 502: generating / generates change
- 504: performing / performs verification
- 506: Decision: Technical conflict detected?
- 508: performing / performs rollback
- 510: generating / generates task for human review
- 512: committing / change is committed

## Claims

1. A computer-implemented method for automatically generating executable software from a high-level specification, the method comprising:
(a) receiving (200), at a processor (102), a high-level input (112) that defines a software project requirement;
(b) decomposing (202), by the processor (102) executing a planning module (105), the high-level input (112) into a plurality of discrete software-development tasks (114), each task having an associated resource-demand estimate;
(c) maintaining (204), in a computer memory (103), an agent registry (108) that stores, for each of a plurality of agents (110),
a. a capability descriptor identifying at least one of: supported programming languages, available tool-chain versions, processor quota, or memory quota, and
b. at least one performance metric indicative of past execution performance of the agent;
(d) selecting (206), by the processor (102) executing a delegation module (106), a first agent from the plurality of agents (110) to execute a first one of the software-development tasks (114), the selection being based on a comparison between the resource-demand estimate of the first task and the capability descriptor and the performance metric of the first agent;
(e) transmitting (208), to an execution environment (116) associated with the first agent, at least one command (115) that implements the first task;
(f) executing (210) the at least one command (115) in the execution environment (116) and obtaining at least one performance datum (118) comprising at least one of: task completion status, execution time, peak-memory usage, or defect rate;
(g) programmatically updating (212), by the processor (102), the performance metric of the first agent in the agent registry (108) on the basis of the at least one performance datum (118); and
(h) repeating (214) steps (d) to (g) for a subsequent one of the software-development tasks, wherein the updating performed in step (g) influences the selection made in step (d) for the subsequent task.

2. The computer-implemented method of claim 1, **characterised by** further comprising estimating (302), prior to step (d), a difficulty score (304) for each software-development task (114), the selection in step (d) additionally being based on the difficulty score (304).

3. The computer-implemented method of any of the claims 1 to 2, **characterised by** that at least one of the plurality of agents (110) is an Al worker (111) that executes a large-language-model and generates source-code deltas and shell commands in response to the software-development tasks (114).

4. The computer-implemented method of any of the claims 1 to 3, **characterised by** that the high-level input (112) of step (a) is received via a multi-modal editor (120) that permits text, image and diagram input and emits change-events annotated with timestamps and session identifiers.

5. The computer-implemented method of any of the claims 1 to 4, **characterised by** that the execution environment (116) of step (f) is a container constrained by a predefined memory limit, the method further comprising aborting execution and reverting a source-code delta when the limit is exceeded.

6. The computer-implemented method of any of the claims 1 to 5, **characterised by** further comprising synchronising, after step (f), by means of a state-synchroniser module (107), a change made to a source-code representation of the software project with a corresponding change in at least one different representation selected from:
- a natural-language design document,
- an abstract syntax tree, or
- a compiled binary.

7. The computer-implemented method of claim 6, **characterised by** further comprising generating, by **the state-synchroniser module (107),** human-readable annotations that highlight differences between the natural-language design document and the source-code representation and injecting the annotations into a multi-modal editor (120) for user approval.

8. The computer-implemented method of any of the claims 3 to 7, **characterised by that** the performance datum (118) obtained in step (f) is fed to a reinforcement-learning algorithm that updates at least one parameter of the large-language-model executed by the AI worker (111).

9. The computer-implemented method of any of the claims 1 to 8, **characterised by that** the agent registry (108) stores data for at least one human agent (113) and at least one computer agent (111), and the delegation module (106) of step (d) is configured to select between the human agent (113) and the computer agent (111).

10. The computer-implemented method of any of the claims 3 to 9, **characterised by that** the at least one command (115) transmitted in step (e) is logged in a command-history, the command-history being provided to the Al worker (111) as part of the context for generating subsequent commands.

11. The computer-implemented method of any of the claims 1 to 10, **characterised by** further comprising compiling the modified source code and, upon successful compilation, launching or reloading a running software process inside the execution environment (116).

12. A computer system (100) comprising at least one processor (102) and at least one memory (103) storing instructions which, when executed by the at least one processor (102), causes the system (100) to carry out the method of any one of claims 1 to 11.

13. A computer system (100) according to claim 12 comprising a non-transitory computer-readable medium storing program instructions which, when executed by one or more processors (102), causes the one or more processors (102) to perform the method of any one of claims 1 to 11.

14. A computer system (100) according to anyone of claims 12 or 13 comprising instructions which, when the program is loaded into memory (103) and executed by a computer (100), causes the computer (100) to carry out the method of any one of claims 1 to 11.

15. A computer system (100) according to claim 14, comprising a computer programm or a set of computer programs wherein the instructions are provided, alternatively or in combination as
(a) source code,
(b) compiled object code, or
(c) an intermediate byte-code,
where the computer program is executed by different single computers not being connected with each other.
